(19) Europäisches Patentamt
European Patent Office
Office européen des brevets

(11) EP 0 606 064 B1

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int. Cl.[6]: **C08F 220/04**, C08F 220/62, C14C 9/02

(21) Anmeldenummer: **94100047.3**

(22) Anmeldetag: **04.01.1994**

(54) **Salze von Copolymeren aus ethylenisch ungesättigten Carbonsäuren und ethylenisch ungesättigten Fettsäurederivaten**

Salt of copolymers of ethylenically unsaturated carboxylic acids and ethylenically unsaturated fatty acid derivatives

Sels de copolymères d'acides carboxyliques insaturés éthyléniques et de dérivés d'acides gras insaturés éthyléniques

(84) Benannte Vertragsstaaten:
**CH DE ES FR GB IT LI NL**

(30) Priorität: **06.01.1993 DE 4300140**

(43) Veröffentlichungstag der Anmeldung:
**13.07.1994 Patentblatt 1994/28**

(73) Patentinhaber: **HOECHST AKTIENGESELLSCHAFT**
**65929 Frankfurt am Main (DE)**

(72) Erfinder:
- **Friedrich, Herbert, Dr.**
  **D-63150 Heusenstamm (DE)**
- **Mees, Bernhard, Dr.**
  **D-65817 Eppstein/Ts. (DE)**
- **Gruber, Richard**
  **D-35647 Waldsolms (DE)**

(56) Entgegenhaltungen:
**DE-A- 4 142 318** **FR-A- 2 224 495**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.8/3.4

## Beschreibung

Die Behandlung von tierischer Haut zur Herstellung von Leder beinhaltet eine Reihe verschiedener mechanischer und chemischer Arbeitsgänge, die in drei Gruppen eingeteilt werden:

1. Prozesse der Wasserwerkstatt (Weiche bis Gerbung)
2. Naßzurichtung des Leders (Neutralisation, Nachgerbung, Färbung und Fettung)
3. Zurichtung des Leders (Binder-, Pigment- und Lackapplikation auf das bereits getrocknete Leder)

Grob gesehen besteht die Haut aus drei Schichten:

1. Die Oberhaut inklusive Haare (Epidermis), die überwiegend aus Keratin besteht und im Äscher entfernt wird.
2. Die Lederhaut (Corium), die das eigentliche Leder bildet.
3. Das Unterhautbindegewebe (Subcutis), das mechanisch (z.B. durch Entfleischen bzw. Spalten) entfernt wird.

Die gegerbte Haut ist zwar gegen Mikrorganismen beständig, darf aber noch nicht getrocknet werden, da die Kollagenfasern irreversibel verkleben würden. Erst durch die Fettung werden die Kollagenfasern so umhüllt, daß das Leder nach der Trocknung weich und geschmeidig und nicht hornartig hart wird.

Bisher übliche Fettungsmittel basieren unter anderem auf sulfonierten Chlorierungsprodukten von Fettsäuren bzw. deren Derivaten.

EP-A-136 641 betrifft Fettungsmittel für Leder und Pelze, wobei von Produkten ausgegangen wird, die durch Sulfochlorierung von vorchlorierten Gemischen aus $C_{12}$-$C_{24}$-Fettsäuretriglyceriden und $C_6$-$C_{20}$-Fettsäureestern einwertiger Alkohole oder Mineralöle und nachfolgender Verseifung erhalten werden.

DE-A-34 24 902 offenbart sulfonierte Chlorierungsprodukte von höheren Fettsäuren der Kettenlänge $C_8$ bis $C_{24}$, gegebenenfalls in Form ihrer Salze oder Ester und deren Verwendung in Fettungsmitteln für Leder oder Pelze, wobei die Fettungsmittel 5 bis 100 Gew.-% an sulfonierten Chlorierungsprodukten enthalten können und in der Regel als wäßrige Lösungen bzw. Emulsionen eingesetzt werden.

Eine weitere Gruppe von Fettungsmitteln basiert auf oxisulfitierten Fettsäuren bzw. deren Derivaten.

EP-A-247 490 nennt Fettstoffe, die durch Oxisulfitierung von Gemischen, enthaltend schwer sulfitierbare Fettstoffe mit Jodzahlen kleiner etwa 100, z.B. Spermöl und Fettsäureestern mit Jodzahlen zwischen etwa 60 und etwa 100, erhalten werden, wobei das Gewichtsverhältnis Fettstoff:Ester zwischen etwa 9:1 und etwa 1:4 liegt.

DE-A-34 37 443 beschreibt Fettungsmittel für Leder und Pelze in Form wäßriger Emulsionen, die durch Oxisulfitierung eines Gemisches aus einem Fettsäureglycerinester (Jodzahl > 20) und einem bei Raumtemperatur flüssigen Fettsäureester eines niederen aliphatischen Alkohols (Jodzahl 50 - 100) erhalten werden.

Pflanzliche und tierische Öle, Fette und Wachse sind oft nur mit einem erheblichen Aufwand an Hilfsstoffen zu lagerbeständigen Produkten zu emulgieren. Vor allem die meist nichtionischen Zusätze zu derartigen Formulierungen, die im Leder nicht fest verankert sind, können z.B. ausgewaschen werden oder - wie im Fall von Mineralölen - im Leder wandern oder sogar aus dem Leder durch Hitzeeinwirkung verdunsten.

Es besteht daher ein Bedürfnis nach einem preiswerten fettenden Emulgator für pflanzliche und tierische Fette, Öle und Wachse, der sich dauerhaft im Leder einlagert, der die Verarbeitung nicht stört und der dem fertigen Leder keine nachteiligen Eigenschaften verleiht. Der Emulgator sollte in geringen Mengen und alleine angewandt in der Lage sein, jedes pflanzliche und/oder tierische Fett, Öl und/oder Wachs in Wasser zu emulgieren.

Die vorstehend genannte Aufgabe wird durch Copolymere auf Basis von ethylenisch ungesättigter Carbonsäuren und ethylenisch ungesättigter Fettsäurederivate nach Anspruch 1 gelöst.

Angesichts des beschriebenen Standes der Technik ist es als äußerst überraschend zu bezeichnen, daß die erfindungsgemäßen Copolymere geeignete fettende Allein-Emulgatoren für Fette, Öle und/oder Wachse darstellen und deren wäßrige Emulsionen mit Fetten, Ölen und/oder Wachsen geeignete Fettungsmittel für Leder und Pelzfelle darstellen.

Ein Gegenstand der Erfindung sind Salze von Copolymeren aus ethylenisch ungesättigten Carbonsäuren und ethylenisch ungesättigten Fettsäurederivaten enthaltend

(A) 1 - 99 Gew.-% an Struktureinheiten A der Formel

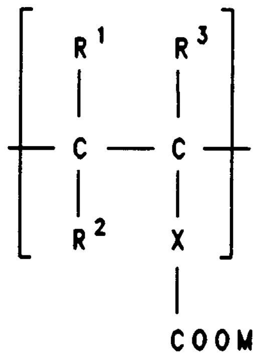

worin

- $R^1$ Wasserstoff oder $C_1$-$C_4$-Alkyl,
- $R^2$ Wasserstoff oder $C_1$-$C_4$-Alkyl,
- $R^3$ Wasserstoff oder $C_1$-$C_4$-Alkyl, bevorzugt Methyl,
- X $-(CH_2)_{0-10}-$ oder $C_6$-$C_{18}$-Aryl, bevorzugt Phenyl und
- M ein Alkali-, Erdalkali- oder Ammoniumion bedeuten,

(B) 99 - 1 Gew.-% an Struktureinheiten B der Formel

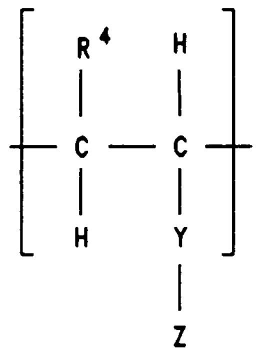

worin

- $R^4$ $C_2$-$C_{16}$-Alkyl oder $C_2$-$C_{16}$-Alkenyl,
- Y $C_1$-$C_{13}$-Alkylen, $-CH_2-(CH = CH-CH_2)_{1-5}-$ oder $-(CH = CH)_{1-3}-$ und
- Z eine Gruppe der Formel
  CN,
  $C(O)N(R^5)_2$,
  worin $R^5$ Wasserstoff, $C_1$-$C_{18}$-Alkyl, $C_1$-$C_{18}$-Alkenyl und/oder $(CH_2)_{1-3}$-OH,
  $COO-R^6$,
  worin $R^6$ $C_1$-$C_{36}$-Alkyl, bevorzugt $C_1$-$C_5$-Alkyl oder $C_{16}$-$C_{36}$-Alkyl,

$CH_2$

|

$CH_2$-OOC-Y-$R^4$,

$CH_2$

|

$C(CH_3)_2$

|

$CH_2$-OOC-Y-$R^4$

$CH_2$

|

CH-OOC-Y-$R^4$

|

$CH_2$-OOC-Y-$R^4$

oder

$CH_2$-OOC-Y-$R^4$

|

CH

|

$CH_2$-OOC-Y-$R^4$

bedeuten,

(C) 0 - 40 Gew.-% an Struktureinheiten C der Formel

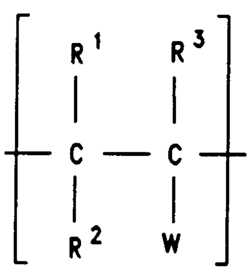

worin

$R^1$, $R^2$ und $R^3$ die oben angegebene Bedeutung besitzen und

W eine Gruppe der Formel CN, $C(O)N(R^5)_2$, worin $R^5$ die oben genannte Bedeutung besitzt, oder $COOR^7$, worin $R^7$ $C_1$-$C_{18}$-Alkyl, bevorzugt $C_1$-$C_{10}$-Alkyl

und

(D) 0 - 40 Gew.-% an Struktureinheiten D der Formel

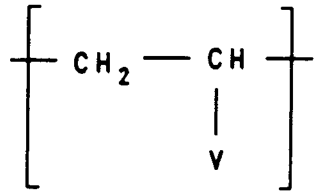

worin

V $C_6$-$C_{18}$-Aryl, bevorzugt Phenyl oder Phenoxyacetyl, $C_4$-$C_6$-Lactam, bevorzugt N-Pyrrolidyl, eine Gruppe der Formel $O$-$R^7$, worin $R^7$ $C_1$-$C_{18}$-Alkyl, bevorzugt $C_1$-$C_{10}$-Alkyl, eine Gruppe der Formel $(O)C$-$R^7$ oder eine Gruppe der Formel $OOC$-$R^7$ bedeutet.

Die Struktureinheiten A leiten sich von ethylenisch ungesättigten Carbonsäuren ab. Beispielsweise seien genannt: Acrylsäure, Methacrylsäure, Crotonsäure, Seneciosäure, Tiglinsäure und/oder Vinylbenzoesäure.

Die Struktureinheiten B leiten sich von ein- oder mehrfach ethylenisch ungesättigten Fettsäurederivaten, bevorzugt deren Estern, Amiden oder Nitrilen ab.

Die zugrundeliegenden ethylenisch ungesättigten Fettsäuren sind üblicherweise ein- oder mehrfach ungesättigte $C_{10}$-$C_{24}$-Fettsäuren, wie Palmitoleinsäure, Ölsäure, Ricinoleinsäure, Gadoleinsäure, Arachidonsäure, Cetoleinsäure, Euracasäure, Nervonsäure, Linolsäure, Linolensäure, Licansäure, Parinarsäure, Tetradecensäure, Hexadecensäure, Eicosensäure, Octadecadiensäure, Eicosatetraensäure, Petroselinsäure, Vacensäure, Cetoleinsäure, Parinarsäure, Arachidonsäure und Clupanodonsäure.

Bei den Fettsäureestern handelt es sich um Ester aus ein-, zwei- und/oder dreiwertigen Alkoholen.
Zu den einwertigen Alkoholen zählen $C_1$-$C_{36}$-Alkohole, bevorzugt gesättigte, geradkettige oder verzweigte $C_1$-$C_5$-Alkohole, wie Methanol, Ethanol, n- und iso-Propanol und n- und tert.-Butanol sowie gesättigte, geradkettige $C_{16}$-$C_{36}$-Alkohole, wie Cetylalkohol, n-Hexacosanol, n-Octacosanol, n-Triacontanol, Coccerylalkohol und Oleylalkohol.
Zu diesen einwertigen Alkoholen zählen auch Sterinalkohole, wie Cholesterol, Lanosterol und Agnosterol.
Zu den zweiwertigen Alkoholen zählen bevorzugt gesättigte, geradkettige oder verzweigte $C_2$-$C_5$-Alkohole, wie Ethylenglykol und Neopentylglykol.
Zu den dreiwertigen Alkoholen zählt bevorzugt Glycerin.

Unter der Bezeichnung Wachse werden üblicherweise Fettsäureester mit anderen Alkoholen als Glycerin verstanden. Die erfindungsgemäß verwendbaren Wachse enthalten üblicherweise Alkohole der Sterinreihe oder höhere, bevorzugt geradzahlige, aliphatische $C_{16}$-$C_{36}$-Alkohole, wie sie vorstehend genannt sind. Es sind sowohl natürlich vorkommende als auch synthetische Wachse als Comonomer geeignet. Geeignete natürlich vorkommende Wachse sind Bienenwachs sowie die Wachse des Walrat, Knäuelgras, Weizen, Reis und der Luzernblätter. Synthetische Wachse enthalten als Fettsäuren üblicherweise die vorstehend genannten einfach ungesättigte Fettsäuren.

Die Ester von Fettsäuren mit Glycerin werden üblicherweise als Fette, bzw. soweit flüssig, als Pflanzen- oder Tieröle bezeichnet.
Geeignete Fette sind sowohl natürlich vorkommende als auch synthetische Fette.
Die natürlich vorkommenden Fette bestehen fast ausnahmslos aus gemischten Glyceriden, in denen zwei- oder sogar dreierlei Fettsäuren enthalten sind.
Diese Fettsäurebestandteile können ein- oder mehrfach ungesättigt und/oder gesättigt sein. Bei den gesättigten Fettsäuren sind insbesondere die $C_4$-$C_{24}$-Fettsäuren geeignet, wie Buttersäure, Capronsäure, Isovaleriansäure, Capronsäure, Laurinsäure, Myristinsäure, Palmitinsäure, Stearinsäure und Arachinsäure.
An bevorzugten Fetten und Ölen, die Glyceride von verschiedenen Fettsäuren darstellen, seien genannt: Kokosnußöl, Palmkernöl, Palmöl, Olivenöl, Ricinusöl, Erdnußöl, Baumwollöl, Sojaöl, Sonnenblumenöl, Rüböl, Rapsöl, Fischöl, Rindertalg, Schweineschmalz und Walfischspeck.
Desweiteren sind auch natürlich vorkommende Fette bzw. Öle und synthetische Fette bzw. Öle geeignet, die nur eine einfach ungesättigte Fettsäure enthalten. Als natürlich vorkommendes Öl sei das Babassuöl genannt. Die synthetischen Fette bzw. Öle enthalten als ungesättigte Fettsäure bevorzugt Ölsäure, Linolsäure, Vaccensäure, Gadoleinsäure,

Arachidonsäure, Cetoleinsäure, Erucasäure oder Nervonsäure und als gesättigte Fettsäuren Caprylsäure, Caprinsäure, Laurinsäure, Myrstinsäure, Palmitinsäure oder Stearinsäure sowie Mischungen aus diesen Säuren.
Die Zusammensetzung der erfindungsgemäß verwendeten Fettsäureester ist der einschlägigen Fachliteratur, wie "L. und M. Fieser, Lehrbuch der organischen Chemie, Verlag Weinheim GmbH, 1955" sowie "Dr. H. Gnamm, Die Fettstoffe des Gerbers, Wiss. Verlagsgesellschaft m.b.H. Stuttgart (1943)" zu entnehmen.

Bei den Fettsäurenitrilen der Formel A handelt es sich um Nitrile von $C_4$-$C_{18}$-Fettsäuren. Beispielhaft seien genannt Kokosfettsäurenitril und Talgfettsäurenitril.

Bei den den Fettsäureamiden zugrundeliegenden Aminen der Formel $HN(R^5)_2$ handelt es sich um primäre und sekundäre Amine, worin $R^5$ die obengenannte Bedeutung besitzt.
Bevorzugte Amine sind Alkylamine, insbesondere $C_1$-$C_5$-Di-Alkylamine und $C_1$-$C_3$-Di-Alkanolamine.

Die erfindungsgemäßen Copolymere enthalten gegebenenfalls Struktureinheiten C, die sich von ethylenisch ungesättigten Carbonsäureestern, -amiden und/oder -nitrilen ableiten.
Bevorzugt sind Ester der Acrylsäure und Methacrylsäure mit aliphatischen $C_1$-$C_{10}$-Alkoholen.
Bevorzugte Amide sind primäre und sekundäre $C_1$-$C_5$-Alkylamide und $C_1$-$C_3$-Alkanolamide der Acrylsäure, Methacrylsäure und Crotonsäure.

Die Struktureinheiten D leiten sich von Arylolefinen, wie Styrol, Vinyllactamen, wie Vinylpyrrolidon, Vinylethern, wie Alkylvinylethern, Vinyl-N-Acylverbindungen, wie Vinyl-N-acetamid und Vinylester ab.
Gebräuchliche Alkylvinylether enthalten Alkylgruppen mit einer Kettenlänge von 1 bis 30, bevorzugt 4 bis 28, besonders bevorzugt 4 bis 24 Kohlenstoffatomen. Beispielhaft seien genannt: Methylvinylether, Ethylvinylether, Butylvinylether, Heptylvinylether, Decylvinylether sowie Mischungen davon.
Gebräuchliche Vinylester sind Ester des Vinylalkohols mit $C_1$-$C_7$-Carbonsäuren.

Bevorzugt ist Vinylacetat.

Die den Struktureinheitem A,B,C und D zugrunde liegenden Verbindungen können als Einzelverbindungen oder in Form von Mischungen in die erfindungsgemäßen Copolymere eingebaut werden.

Ebenfalls Gegenstand der Erfindung ist ein Verfahren zur Herstellung von Copolymeren auf Basis von ethylenisch ungesättigten Carbonsäuren und Fettsäurederivaten, das dadurch gekennzeichnet ist, daß mindestens eine ethylenisch ungesättigte Carbonsäure als Monomer und mindestens ein ethylenisch ungesättigtes Fettsäurederivat als Comonomer in Gegenwart eines Radikalspenders, gegebenenfalls in Gegenwart eines Reglers und/oder eines Coinitiators, miteinander polymerisiert werden und anschließend mit der wäßrigen Lösung einer Base versetzt werden. Das bei der Polymerisation erhaltene Reaktionsgemisch wird bevorzugt mit einer zu den im Copolymer enthaltenen freien Carboxylgruppen äquimolaren Menge einer Base versetzt. Darüberhinaus kann die Base, bezogen auf die freien Carboxylgruppen, sowohl im Unterschuß als auch im Überschuß zugesetzt werden.

Die Herstellung der erfindungsgemäßen Copolymere erfolgt nach bekannten diskontinuierlichen und kontinuierlichen Polymerisationsverfahren, wie Masse-oder Lösungspolymerisation und Initiierung mit üblichen Radikalspendern, wie Diacylperoxide, z.B. Dilauroylperoxid und Dibenzoylperoxid; Peroxidicarbonate, z.B. Diacetylperoxidicarbonat, Dicyclohexylperoxidicarbonat, Di-2-ethylhexylenperoxidicarbonat und Dimyristilperoxidicarbonat; Acylperoxiester, z.B. tert.-Butylperneodecanoat, tert.-Butylperpivalat, tert.-Butyl-per-2-ethylhexanoat, tert.-Butylpermaleinat und tert.-Butylperbenzoat; Perketale, z.B. 2,2-Bis-(tert.-butylperoxy)butan; Dialkylperoxide, z.B. Dicumylperoxid, Di-tert.-amylperoxid und Di-tert.-butylperoxid; Alkylhydroperoxide, z.B. Cumolhydroperoxid und tert.-Butylhydroperoxid und sauerstoffreie Radikalspender, z.B. 2,2'-Azo-bis(isobutyronitril), 3,4-Dimethyl-3,4-diphenylhexan und 2,3-Dimethyl-2,3-diphenylbutan.

Die Initiatoren können als Einzelstoffe oder in Form von Mischungen eingesetzt werden, wobei im allgemeinen die eingesetzte Menge zwischen 0,1 bis 20 Gew.-%, bevorzugt 0,2 bis 15 Gew.-%, besonders bevorzugt 0,2 bis 10 Gew.-%, bezogen auf die Monomeren, liegt.

Die Polymerisation erfolgt in der Regel bei Temperaturen von 50 bis 200°C, vorzugsweise 100 bis 180°C, wobei bei Verwertung von Olefinen oder

Lösungsmitteln mit Siedetemperaturen unterhalb der Polymerisationstemperatur zweckmäßig unter Druck gearbeitet wird.

Die Polymerisation wird zweckmäßig unter Luftausschluß, d.h. wenn nicht unter Siedebedingungen gearbeitet werden kann, z.B. unter Stickstoff durchgeführt, da Sauerstoff die Polymerisation verzögert. Durch Mitverwendung von Redox-Coinitiatoren, wie Benzoin, Dimethylanilin, Ascorbinsäure sowie organisch löslichen Komplexen von Schwermetallen, wie solchen von Kupfer, Kobalt, Mangan, Eisen, Nickel oder Chrom, kann die Reaktion beschleunigt werden. Die üblicherweise eingesetzten Mengen liegen bei 0,1 bis 2000 Gew.-ppm, vorzugsweise 0,1 bis 1000 Gew.-ppm. Bei der Wahl des Initiators bzw. des Initiatorsystems ist es zweckmäßig, bei der gewählten Polymerisationstemperatur darauf zu achten, daß die Halbwertzeit des Initiators oder des Initiatorsystems weniger als 2 Stunden beträgt.

Zur Erzielung niedrigmolekularer Copolymerer ist es von Vorteil in Gegenwart von Reglern zu arbeiten. Geeignete Regler sind beispielsweise Alkylalkohole, wie Buten-1-ol-3, organische Mercaptoverbindungen, wie tert-Butylmercaptan, n-Octylmercaptan, und n-Dodecylmercaptan, die im allgemeinen in Mengen von 0,1 - 10 Gew.-%, bezogen auf die Reaktionsmischung, eingesetzt werden.

Das Molekulargewicht ($\overline{M}_w$) der erfindungsgemäßen Copolymeren liegt im allgemeinen zwischen 1000 und 10 000, bevorzugt zwischen 1000 und 5 000.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rohrreaktoren und statische Mischer.

Eine geeignete Polymerisationsmethode ist die Massenpolymerisation. Dabei werden die ethylenisch ungesättigten Carbonsäuren und die ethylenisch ungesättigten Fettsäurederivate sowie gegebenenfalls weitere Comonomere in Gegenwart eines Initiators und in Abwesenheit von Lösungsmitteln polymerisiert. Dieses Verfahren ist besonders geeignet für solche Copolymeren, bei denen die eingesetzten Monomere bei Raumtemperatur flüssig sind.

Zweckmäßigerweise mischt man alle Monomeren in der gewünschten Zusammensetzung und legt diese Mischung im Reaktor vor, erhitzt unter Rühren auf die gewünschte Polymerisationstemperatur und dosiert den Initiator und gegebenenfalls Coinitiator sowie Regler innerhalb 5 bis 15 Minuten zu und rührt anschließend die Reaktionsmischung über mehrere Stunden. Hierbei kann es zweckmäßig sein, den Initiator sowie den Coinitiator getrennt in Form von Lösungen in einer kleinen Menge eines geeigneten Lösungsmittels zuzudosieren.

In einer weiteren Ausführungsform ist es auch möglich, ein Gemisch aus einem Monomer und dem Regler vorzulegen, unter Rühren auf die gewünschte Polymerisationstemperatur zu erhitzen und anschließend das Comonomer, gegebenenfalls weitere Comonomere, den Initiator und gegebenenfalls Coinitiator zuzugeben.

Geeignet zur Herstellung der gewünschten Copolymeren ist auch die Lösungspolymerisation. Sie wird durchgeführt in Lösungsmitteln, in denen die Monomeren und die entstehenden Copolymeren löslich sind. Es sind hierfür alle Lösungsmittel geeignet, die diese Vorgabe erfüllen und mit den Monomeren keine Reaktion eingehen. Beispielsweise sind dies Aceton, Methylethylketon, Ethylacetat, Ethylenglykoldimethylether, Tetrahydrofuran, Dioxan und Neutralöle, wie Mineralöle, Weißöle und Prozeßöle. In einer besonderen Ausführungsform des erfindungsgemäßen Verfahrens können auch die eingesetzten Monomere oder ein Teil davon als Lösungsmittel fungieren. Dies gilt insbesondere bei der Umsetzung mit natürlichen Fetten und Ölen sowie $C_1$-$C_6$-Alkylestern von ethylenisch ungesättigten Fettsäuren.

Üblicherweise wird die Monomerenmischung in dem Lösungsmittel vorgelegt und unter Stickstoffbegasung unter Rühren auf die gewünschte Reaktionstemperatur gebracht. Anschließend wird unter Rühren der Initiator und gegebenenfalls Coinitiator sowie Regler innerhalb von 5 bis 15 Minuten zugegeben. Danach wird die Reaktionsmischung über mehrere Stunden weitergerührt.

In einer weiteren Ausführungsform wird ein Monomer in dem Lösungsmittel vorgelegt, auf die gewünschte Polymerisationstemperatur erhitzt und anschließend das Comonomer, gegebenenfalls weitere Comonomere, der Initiator und gegebenenfalls Coinitiator zugegeben.

Nach Durchführung der eigentlichen Copolymerisation wird das erhaltene Reaktionsgemisch üblicherweise auf eine Temperatur unterhalb 100°C, bevorzugt 20 - 80°C, besonders bevorzugt 20 bis 40°C, abgekühlt und das Reaktionsgemisch zur "Neutralisation" der freien Carboxylgruppe der ethylenisch ungesättigten Carbonsäuren mit mindestens der äquimolaren, bevorzugt äquimolaren Menge einer Base versetzt. Als Basen werden bevorzugt 20 - 40 gew.-%ige wäßrige Lösungen von Alkalimetallhydoxiden oder wasserlöslichen Stickstoffverbindungen, wie Ammoniak bzw. $C_2$-$C_3$-Alkanolaminen, eingesetzt. Der pH-Wert der wäßrigen Lösung liegt nach der Basenzugabe bevorzugt zwischen 7,0 bis 7,5.

Das erfindungsgemäße Copolymer kann problemlos durch Verdampfen des Lösungsmittels erhalten werden.

Ein weiterer Gegenstand der Erfindung ist die Verwendung der erfindungsgemäßen Copolymere als fettende Emulgatoren für pflanzliche und/oder tierische Fette, Öle und/oder Wachse. Bevorzugt werden hierzu wäßrige Emulsionen dieser Copolymere eingesetzt.

Diese werden üblicherweise dadurch erhalten, daß das Reaktionsgemisch, nach erfolgter "Neutralisation" der Copolymeren mit 50 bis 80 Gew.-% Wasser, bezogen auf das Gesamtgewicht der Emulsion bis zur gewünschten Endkonzentration verdünnt wird. Die Endkonzentration liegt üblicherweise zwischen 20 und 50 Gew.-%, bezogen auf das Gesamtgewicht der Emulsion.

Der pH-Wert der wäßrigen Emulsionen liegt bevorzugt im Bereich von 7,0 bis 7,5. Es hat sich gezeigt, daß die erfindungsgemäßen Emulsionen auch in Form saurer Lösungen eingesetzt werden können. Zu diesem Zweck wird der pH-Wert der Emulsion durch Säurezugabe bevorzugt auf einen Wert von 6,0 bis 6,9 eingestellt.

Die so erhaltene Emulsion zeigt ausgezeichnete fettende Wirkung bei Leder und Pelzfellen und verleiht diesen einen angenehmen weichen Griff. In den Fällen, in denen Neutralöle, wie Mineralöle, Weißöle und Prozeßöle nicht als Lösungsmittel bei der Herstellung der erfindungsgemäßen Copolymere eingesetzt werden, können diese zur Unterstützung der fettenden Wirkung der obengenannten wäßrigen Emulsion beigefügt werden. Der wäßrigen Emulsion können diese Hilfsstoffe in einer Menge zugesetzt werden, bei der ausgeschlossen ist, daß eine Phasentrennung auftritt.

Die erfindungsgemäßen Emulsionen zeichnen sich durch eine hohe Wasseremulgierbarkeit mit ausgezeichneter Emulsionsbeständigkeit aus.

Herstellungsbeispiele für Copolymere und Fettungsmittel
(JZ bedeutet Jodzahl)

Beispiel 1:

120 g Fischöl (JZ = 121) und 25 g Methacrylsäure werden unter Stickstoffatmosphäre auf 130°C erwärmt. Bei dieser Temperatur tropft man innerhalb 8 Minuten 2 g Di-tert.-butylperoxid zu und läßt bei 130°C 2 Stunden nachrühren. Danach wird das Reaktionsgemisch auf 80°C abgekühlt und mit 25 g wäßriger Natronlauge (33 gew.-%ig) versetzt. Der pH-Wert liegt im Bereich zwischen 7,0 und 7,2. Anschließend werden 216 g entsalztes Wasser hinzugefügt und die Emulsion über einen Zeitraum von 2 Stunden bei einer Temperatur von 80°C gerührt. Die erhaltene Emulsion ist bei einer Temperatur im Bereich von 5 bis 50°C stabil.

Beispiele 2 - 6:

Analog Beispiel 1 erfolgt die Umsetzung mit Rüböl (JZ = 111), Sonnenblumenöl (JZ = 129), Olivenöl (JZ = 79), Rinderklauenöl (JZ = 75) und Palmöl
(JZ = 52).

Beispiel 7:

72 g Ölsäuremethylester (JZ = 90) und 0,45 g 3-Mercaptopropionsäure als Regler werden unter Stickstoffatmosphäre auf 130°C erwärmt. Bei dieser Temperatur werden 2 g Di-tert.-butylperoxid gelöst in 16 g Acrylsäure innerhalb 10 Minuten zugetropft und anschließend bei einer Temperatur von 130°C über 3 Stunden gerührt. Danach wird das Reaktionsgemisch auf eine Temperatur von 80 bis 90°C abgekühlt, mit 30,3 g wäßriger Natronlauge (33 gew.-%ig) versetzt.
Das Copolymer wird isoliert und $^1$H-NMR-spektroskopisch ($D_2O/CD_3OH$ 1:1) untersucht. Die Analysedaten ergeben eine Verteilung an Struktureinheiten A zu Struktureinheiten B von 97:3.

Beispiele 8 und 9:

Analog Beispiel 7 erfolgt die Umsetzung mit Isopropylester einer Fischfettsäure (JZ = 54) und Rapsölfettsäuremethylester (JZ = 97).

Beispiel 10:

60 g eines Rindertalgs (JZ = 52) werden in 60 g eines Mineralöls gelöst und mit 25 g Methacrylsäure unter Stickstoffatmosphäre auf 130°C erwärmt. Bei dieser Temperatur werden innerhalb 5 Minuten 2 g Di-tert.-butylperoxid zugetropft und anschließend über 2 Stunden gerührt. Danach wird das Reaktionsgemisch auf eine Temperatur zwischen 80 bis 90°C abgekühlt, mit 22,5 g wäßriger Natronlauge (33 gew.-%ig) versetzt und mit 275 g entsalztem Wasser während 2 Stunden bei 80°C gerührt.

Beispiel 11:

Analog Beispiel 10 erfolgt die Umsetzung mit Bienenwachs (JZ = 20).

Beispiel 12:

120 g Palmöl (JZ = 52), 25 g Methacrylsäure und 7 g Methacrylsäureisobutylester werden unter Stickstoffatmosphäre auf 130°C erwärmt. Bei dieser Temperatur werden innerhalb 5 Minuten 5 g Di-tert.-butylperoxid zugetropft. Anschließend wird noch 2 Stunden bei einer Temperatur von 130 bis 135°C gerührt und dann die Lösung auf 90°C abgekühlt. Das Reaktionsgemisch wird mit 27,3 g wäßriger Natronlauge (33 gew.-%ig) versetzt und nach Zugabe von 189,7 g entsalztem Wasser noch 3 Stunden bei 80 bis 90°C gerührt.

Beispiele 13 bis 17:

Analog Beispiel 12 erfolgt die Umsetzung mit Fischöl (JZ = 121), Sonnenblumenöl (JZ = 129), Olivenöl (JZ = 79), Rüböl (JZ = 111) und Rinderklauenöl (JZ = 75).

Beispiel 18:

120 g Rapsölsäuremethylester (JZ = 97), 25 g Methacrylsäure und 7 g Methacrylsäure-n-butylester werden unter Stickstoffatmosphäre auf 130°C erwärmt. Bei dieser Temperatur werden innerhalb von 5 Minuten 2 g Di-tert.-butylperoxid zugetropft. Bei dieser Temperatur wird noch 3 Stunden nachgerührt und anschließend auf 90°C abgekühlt. Nach Zugabe von 26,3 g wäßriger Natronlauge (33 gew.-%ig) und 200 g Wasser wird noch 3 Stunden bei 80 bis 90°C gerührt.

Beispiele 19 und 20:

Analoge Beispiel 18 erfolgt die Umsetzung mit Ölsäuremethylester (JZ = 90) und Fischölsäureisopropylester (JZ = 54).

Beispiel 21:

120 g Rapsölsäuremethylester (JZ = 97), 25 g Methyacrylsäure, 10 g Styrol und 2 g Di-tert.-butylperoxid werden unter Stickstoffatmosphäre auf 150°C erwärmt und 2 Stunden bei dieser Temperatur gerührt. Danach kühlt man auf 80-90°C ab, versetzt mit 32,7 g Natronlauge (33 gew.-%ig) und 100 g warmem Wasser (60-70°C), rührt 2 Stunden bei 80-90°C, stellt durch Zugabe von 3 g Eisessig einen pH-Wert von 6,6 bis 6,9 ein und verdünnt mit 94,8 g Wasser auf die gewünschte Endkonzentration.

Beispiel 22:

120 g Ölsäuremethylester (JZ = 90), 30 g Methacrylsäure, 5 g Vinylpyrrolidon und 2 g Di-tert.-butylperoxid werden unter Stickstoffatmosphäre auf 150°C erwärmt und 3 Stunden bei dieser Temperatur gerührt. Danach kühlt man auf 85-95°C ab, versetzt mit 43,7 g Natronlauge (33 gew.-%ig) und 90 g warmem Wasser (60-70°C), rührt 2 Stunden bei 80-90°C, stellt durch Zugabe von 4,3 g Eisessig auf einen pH-Wert von 6,5 ein und verdünnt mit 92,5 g Wasser auf die gewünschte Endkonzentration.

Beispiel 23:

60 g Ölsäuremethylester (JZ = 90), 60 g Palmöl (JZ = 52), 15 g Methacrylsäure, 15 g Acrylsäure und 2 g Di-tert.-butylperoxid werden unter Stickstoffatmosphäre auf 160°C erwärmt und 3 Stunden bei dieser Temperatur gerührt. Danach kühlt man auf 80-90°C ab, versetzt mit 48,5 g Natronlauge (33 gew.-%ig) und 93 g warmem Wasser (60-70°C), rührt 2 Stunden bei 80-90°C, stellt durch Zugabe von 7,4 g Eisessig auf einen pH-Wert von 6,6 ein und verdünnt mit 76,1 g Wasser auf die gewünschte Endkonzentration.

Beispiel 24:

40 g Rinderklauenöl (JZ = 75), 80 g Sonnenblumenöl (JZ = 129), 10 g Acrylsäure, 20 g Methacrylsäure und 2g Di-tert.-butylperoxid werden unter Stickstoffatmosphäre auf 150°C erwärmt und 3 Stunden bei dieser Temperatur gerührt. Danach kühlt man auf 80-90°C ab, versetzt mit 48,3 g Natronlauge (33 gew.- %ig) und 90 g warmem Wasser (60-70°C), rührt 2 Stunden bei 80-90°C, stellt durch Zugabe von 8,4 g Eisessig auf einen pH-Wert im Bereich von 6,3 bis 6,6 ein und verdünnt mit 76,1 g Wasser auf die gewünschte Endkonzentration.

Anwendungsbeispiele:

Soweit nicht anders angegeben, sind (®) registrierte Warenzeichen der Hoechst Aktiengesellschaft
Alle Angaben (Gew.-%) bezogen auf das Falzgewicht des Leders

Anwendungsbeispiel A:

| Fettung von Oberledern | | |
|---|---|---|
| Rohmaterial: | Wet-blue, Schaf, gefalzt auf 0,8 - 1,0 mm Dicke | |
| Fettungsmittel: | Beispiel 7 | |
| Waschen: | 400 % Wasser 40°C | |
| | 0,4 % Oxethylierungsprodukt (®Remolgan PM) | 20 min |
| | Flotte ablassen | |
| Waschen: | 400 % Wasser 35°C | 10 min |
| | Flotte ablassen | |
| | 200 % Wasser 35°C | |
| | 3 % Aliphatischer Polyaldehyd (®Granofin PL) | 20 min |
| | 4 % ®Tannesco HN (Ciba-Geigy, Schweiz) | 40 min |
| Waschen: | 400 % Wasser 35°C | 10 min |
| | Flotte ablassen | |
| Neutralisation: | 200 % Wasser 35°C | |
| | 2 % Natriumformiat | 20 min |
| | 3 % Fettungsmittel | 5 min |
| | 1 % Natriumbicarbonat | 40 min |
| | pH-Wert der Flotte: 6,1 | |
| | Flotte ablassen | |
| Waschen: | 400 % Wasser 50°C | 10 min |
| | Flotte ablassen | |
| Färbung I: | 200 % Wasser 50°C | |
| | 1 % Oxethylierungsprodukt (®Dispersogen ASN) | |
| | 2 % Lederfarbstoff (®Remaderm) | 30 min |
| Fettung I: | 6 % Fettungsmittel | 45 min |
| | 1,5 % Ameisensäure 85 %ig | 20 min |
| | Flotte ablassen | |
| Waschen: | 400 % Wasser 50°C | 10 min |
| | Flotte ablassen | |
| Färbung II: | 200 % Wasser 50°C | |
| | 1,5 % Lederfarbstoff (®Remaderm) | 30 min |
| Fettung II: | 6 % Fettungsmittel | 45 min |
| | 2 % Ameisensäure 85 %ig | 30 min |
| | kalt spülen, betriebsüblich fertigstellen | |

Anwendungsbeispiel B:

| Fettung von Oberledern (Rindboxleder) | | |
|---|---|---|
| Rohmaterial: | Wet-blue, Rind, gefalzt auf 1,6 - 1,0 mm Dicke | |
| Fettungsmittel: | Beispiel 1 | |
| Waschen: | 200 % Wasser 35°C | 15 min |
| | Flotte ablassen | |
| Neutralisation: | 150 % Wasser 35°C | |
| | 1,5 % Natriumformiat | 20 min |
| | 0,5 % Natriumbicarbonat | 40 min |
| | pH-Wert der Flotte: 5,0 | |
| | Flotte ablassen | |
| Waschen: | 300 % Wasser 60°C | 10 min |
| | Flotte ablassen | |
| Färbung: | 100 % Wasser 60°C | |
| | 4 % ®Solidermin (Cassella AG) | 45 min |
| Nachgerbung: | 4 % Wäßrige Polymerlösung (®Granofin M) | 30 min |
| | 5 % Nachgerbstoff Quebracho | |
| | 5 % Vegetabiler Gerbstoff (®Granofin TA) | 60 min |
| | 2 % Harzgerbstoff (®Granofin MH) | 20 min |
| | 10 % Fettungsmittel | 60 min |
| | 3 % Ameisensäure 85 %ig | 20 min |
| | Flotte ablassen | |
| Nachbehandlung: | 100 % Wasser 60°C | |
| | 1 % kationisch emulgierte Fettstoffe (®Derminol-Licker K) | 10 min |
| | 2 % ®Solidermin (Cassella AG) | 20 min |
| | 1 % Ameisensäure 85 %ig | 15 min |
| | kurz kalt spülen, Leder auf Bock, betriebsüblich weiterarbeiten | |

Anwendungsbeispiel C:

| Fettung von Möbelleder | | |
|---|---|---|
| Rohmaterial: | chromgegerbte Rinderhaut (Süddeutschland), gefalzt auf 1,0 - 1,2 mm Dicke | |
| Fettungsmittel: | Beispiel 12 | |
| Waschen: | 300 % Wasser 35°C | 10 min |
| | Flotte ablassen | |
| Neutralisation: | 200 % Wasser 35°C | |
| | 5 % ®Tannesco HN (Ciba-Geigy, Schweiz) | 30 min |
| | 5 % Fettungsmittel | 30 min |
| | 1,5 % Natriumformiat | 10 min |
| | 0,5 % Natriumbicarbonat | 60 min |
| | pH-Wert der Flotte = 6,4 | |
| | Flotte ablassen | |
| Waschen: | 300 % Wasser 50°C | 10 min |
| | Flotte ablassen | |
| Färbung: | 200 % Wasser 50°C | |
| | 4 % Fettsäure-Eiweiß-Kondensationsprodukt (®Ofnapon AS) | 30 min |
| | 1,5 % ®Solidermin (Cassella AG) | 60 min |
| Fettung: | 7 % Fettungsmittel | 45 min |
| | 1,5 % Ameisensäure 85 %ig | 20 min |
| | kalt spülen, Leder auf Bock, betriebsüblich weiterarbeiten | |

Anwendungsbeispiel D:

| Fettung von Bekleidungsleder | | |
|---|---|---|
| Rohmaterial: | Wet-blue, Ziege, gefalzt auf 0,8 mm Dicke | |
| Fettungsmittel: | Beispiel 18 | |
| Nachgerbung: | 70 % Wasser 30°C | |
| | 0,6 % Ameisensäure 85 %ig | 10 min |
| | 3 % Zirkongerbstoff (®Tanfix SZS) | 60 min |
| | 30 % Wasser 40°C | |
| | 1 % Natriumformiat | 20 min |
| | 1,2 % Natriumbicarbonat | 30 min |
| | pH-Wert der Flotte = 4,8 | |
| | Flotte ablassen | |
| Waschen: | 300 % Wasser 40°C | 10 min |
| | Flotte ablassen | |
| Nachgerbung: | 100 % Wasser 40°C | |
| | 3 % Poly-Phenolkondensationsprodukt (®Granofin FL) | |
| | 3 % Vegetabiler Farbstoff (®Granofin TA) | 90 min |
| | Flotte ablassen | |
| Fettung: | 100 % Wasser 50°C | |
| | 6 % Fettungsmittel | 60 min |
| | 0,5 % Ameisensäure 85 %ig | 20 min |
| | Flotte ablassen | |
| Waschen: | 300 % Wasser 25°C | 10 min |
| | über Nacht auf Bock, trocknen, anfeuchten, stollen, spannen, Narbenseite falzen, schleifen, wiegen. | |

Alle Angaben in Gew.-% ab jetzt bezogen auf Trockengewicht.

| | | |
|---|---|---|
| Broschur: | 1000 % Wasser 40°C | |
| | 0,2 % Oxethylierungsprodukt (®Remolgan PM) | 120 min |
| | Flotte ablassen | |
| Färbung: | 800 % Wasser 50°C | |
| | 1 % Ammoniak 25 %ig | 10 min |
| | 5 % ®Solidermin (Cassella AG) | 30 min |
| Fettung: | 5 % Fettungsmittel | 60 min |
| | 2,5 % Ameisensäure 85 %ig | 20 min |
| | Flotte ablassen | |
| Waschen: | 1000 % Wasser 30°C | 10 min |
| | Flotte ablassen | |
| | kalt spülen, trocknen, anfeuchten, stollen, | |
| | millen, spannen. | |

## Patentansprüche

**1.** Salze von Copolymeren aus ethylenisch ungesättigten Carbonsäuren und ethylenisch ungesättigten Fettsäurederivaten enthaltend

(A) 1 - 99 Gew.-% an Struktureinheiten A der Formel

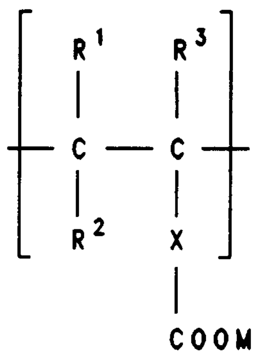

worin

$R^1$ Wasserstoff oder $C_1$-$C_4$-Alkyl,
$R^2$ Wasserstoff oder $C_1$-$C_4$-Alkyl,
$R^3$ Wasserstoff oder $C_1$-$C_4$-Alkyl, bevorzugt Methyl,
X $-(CH_2)_{0-10}-$ oder $C_6$-$C_{18}$-Aryl, bevorzugt Phenyl und
M ein Alkali-, Erdalkali- oder Ammoniumion bedeuten,

(B) 99 - 1 Gew.-% an Struktureinheiten B der Formel

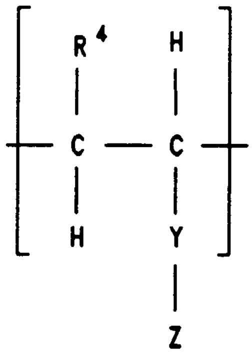

worin

| | |
|---|---|
| $R^4$ | $C_2$-$C_{16}$-Alkyl oder $C_2$-$C_{16}$-Alkenyl, |
| Y | $C_1$-$C_{13}$-Alkylen, $-CH_2-(CH=CH-CH_2)_{1-5}-$ oder $-(CH=CH)_{1-3}-$ und |
| Z | eine Gruppe der Formel<br>CN,<br>$C(O)N(R^5)_2$,<br>worin $R^5$ Wasserstoff, $C_1$-$C_{18}$-Alkyl, $C_1$-$C_{18}$-Alkenyl und/oder $-(CH_2)_{1-3}-OH$,<br>$COOR^6$,<br>worin $R^6$ $C_1$-$C_{36}$-Alkyl, bevorzugt $C_1$-$C_5$-Alkyl oder $C_{16}$-$C_{36}$-Alkyl, |

$CH_2$
|
$CH_2$-OOC-Y-$R^4$,

$CH_2$
|
$C(CH_3)_2$
|
$CH_2$-OOC-Y-$R^4$ ,

$CH_2$
|
CH-OOC-Y-$R^4$
|
$CH_2$-OOC-Y-$R^4$

oder

$CH_2$-OOC-Y-$R^4$
|
CH
|
$CH_2$-OOC-Y-$R^4$ ,

bedeuten,
(C) 0 - 40 Gew.-% an Struktureinheiten C der Formel

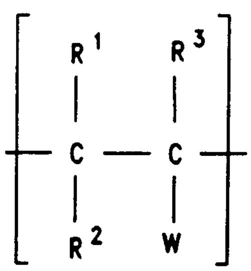

worin

| | |
|---|---|
| $R^1$, $R^2$ und $R^3$ | die oben angegebene Bedeutung besitzen und |
| W | eine Gruppe der Formel CN, $C(O)N(R^5)_2$, worin $R^5$ die oben genannte Bedeutung besitzt, oder $COOR^7$, worin $R^7$ $C_1$-$C_{18}$-Alkyl, bevorzugt $C_1$-$C_{10}$-Alkyl |

und

(D) 0 - 40 Gew.-% an Struktureinheiten D der Formel

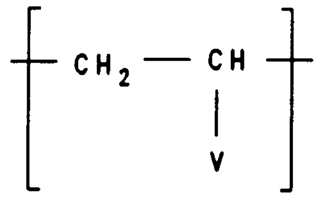

worin

V $C_6$-$C_{18}$-Aryl, bevorzugt Phenyl oder Phenoxyacetyl, $C_4$-$C_6$-Lactam, bevorzugt N-Pyrrolidyl, eine Gruppe der Formel O-$R^7$, worin $R^7$ $C_1$-$C_{18}$-Alkyl, bevorzugt $C_1$-$C_{10}$-Alkyl, eine Gruppe der Formel (O)C-$R^7$ oder eine Gruppe der Formel OOC-$R^7$ bedeutet.

2. Verfahren zur Herstellung von Copolymeren nach Anspruch 1, dadurch gekennzeichnet, daß mindestens eine ethylenisch ungesättigte Carbonsäure als Monomer und mindestens ein ungesättigtes Fettsäurederivat als Comonomer in Gegenwart eines Radikalspenders, gegebenenfalls in Gegenwart eines Reglers und/oder eines Coinitiators, miteinander polymerisiert werden und anschließend mit einer Base versetzt werden.

3. Verfahren nach Anspruch 2, dadurch gekennzeichnet, daß eine Masse- oder Lösungspolymerisation durchgeführt wird.

4. Verfahren nach Anspruch 2, dadurch gekennzeichnet, daß man die Polymerisation in einem Rührkessel, einer Rührkesselkaskade, einem Rohrreaktor oder einem statischen Mischer durchführt.

5. Verfahren nach Anspruch 2, dadurch gekennzeichnet, daß die Polymerisation in Gegenwart von 0,1 bis 20 Gew.-%, bevorzugt 0,2 bis 10 Gew.-%, bezogen auf den Monomerengehalt, eines Radikalspenders erfolgt.

6. Verfahren nach Anspruch 2, dadurch gekennzeichnet, daß die Polymerisation in Gegenwart von 0,1 bis 10 Gew.-%, bezogen auf den Monomerengehalt, eines Reglers erfolgt.

7. Verfahren nach Anspruch 2, dadurch gekennzeichnet, daß die Polymerisation in Gegenwart von 0,1 bis 2000 Gew.-ppm, bevorzugt 0,1 bis 1000 Gew.-ppm eines Coinitiators erfolgt.

8. Verfahren nach Anspruch 2, dadurch gekenneichnet, daß die Polymerisation bei einer Temperatur von 50 bis 200°C, bevorzugt 100 bis 180°C erfolgt.

9. Verfahren nach Anspruch 2, dadurch gekennzeichnet, daß das Reaktionsgemisch nach der Polymerisation auf eine Temperatur unterhalb 100°C, bevorzugt 20 bis 80°C, besonders bevorzugt 20 bis 40°C, abgekühlt wird.

10. Verfahren nach Anspruch 2, dadurch gekennzeichnet, daß das Reaktionsgemisch mit einer zu den im Copolymer enthaltenen freien Carboxylgruppen äquimolaren Menge einer Base versetzt wird.

11. Verfahren nach Anspruch 10, dadurch gekennzeichnet, daß als Base eine 20 bis 40 gew.-%ige wäßrigen Lösung eines Alkalimetallhydroxids oder einer wasserlöslichen Stickstoffverbindung verwendet wird.

12. Verwendung von Copolymeren nach Anspruch 1, als fettende Emulgatoren für pflanzliche und/oder tierische Fette, Öle und/oder Wachse.

13. Fettungsmittel für Leder und Pelzfelle enthaltend mindestens ein Copolymer nach Anspruch 1.

14. Fettungsmittel nach Anspruch 13 enthaltend
mindestens ein Copolymer nach Anspruch 1,
gesättigte und/oder ungesättigte Fettsäurederivate, bevorzugt Fettsäureester, besonders bevorzugt Fettsäuretriglyceride Wasser und
gegebenenfalls Zusatzstoffe, bevorzugt Neutralöle.

15. Verfahren zur Herstellung von Fettungsmitteln nach Anspruch 13, umfassend die Maßnahmen:

- Herstellung von Copolymeren nach Anspruch 1 durch ein Verfahren, das die Maßnahmen nach einem der Ansprüche 2 bis 10 umfasst und
- gegebenenfalls Zugabe einer Säure sowie
- Zugabe von 50 bis 80 Gew.-% Wasser, bezogen auf das Gesamtgewicht der Emulsion.

## Claims

1. A salt of a copolymer of ethylenically unsaturated carboxylic acids and ethylenically unsaturated fatty acid derivatives comprising

(A) 1 - 99% by weight of structural units A of the formula

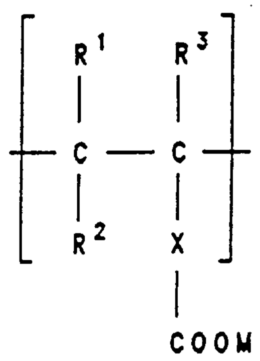

in which

$R^1$ is hydrogen or $C_1$-$C_4$-alkyl,
$R^2$ is hydrogen or $C_1$-$C_4$-alkyl,
$R^3$ is hydrogen or $C_1$-$C_4$-alkyl, preferably methyl,
X is $-(CH_2)_{0-10}-$ or $C_6$-$C_{18}$-aryl, preferably phenyl, and
M is an alkali metal, alkaline earth metal or ammonium ion,

(B) 99 - 1% by weight of structural units B of the formula

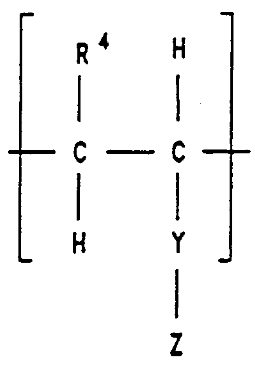

in which

$R^4$ is $C_2$-$C_{16}$-alkyl or $C_2$-$C_{16}$-alkenyl,
Y is $C_1$-$C_{13}$-alkylene, $-CH_2-(CH=CH-CH_2)_{1-5}-$ or $-(CH=CH)_{1-3}-$ and
Z is a group of the formula
CN,
$C(O)N(R^5)_2$,

in which $R^5$ is hydrogen, $C_1$-$C_{18}$-alkyl, $C_1$-$C_{18}$-alkenyl and/or $-(CH_2)_{1-3}$-OH, $COOR^6$, in which $R^6$ is $C_1$-$C_{36}$-alkyl, preferably $C_1$-$C_5$-alkyl or $C_{16}$-$C_{36}$-alkyl,

$CH_2$
|
$CH_2$-OOC-Y-$R^4$,

$CH_2$
|
$C(CH_3)_2$
|
$CH_2$-OOC-Y-$R^4$,

$CH_2$
|
CH-OOC-Y-$R^4$
|
$CH_2$-OOC-Y-$R^4$

or

$CH_2$-OOC-Y-$R^4$
|
CH
|
$CH_2$-OOC-Y-$R^4$ ,

(C) 0 - 40% by weight of structural units C of the formula

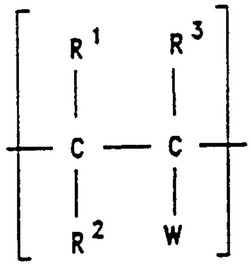

in which

$R^1$, $R^2$ and $R^3$ have the abovementioned meaning and
W is a group of the formula CN, $C(O)N(R^5)_2$, in which $R^5$ has the abovementioned meaning, or $COOR^7$, in which $R^7$ is $C_1$-$C_{18}$-alkyl, preferably $C_1$-$C_{10}$-alkyl

and

(D) 0 - 40% by weight of structural units D of the formula

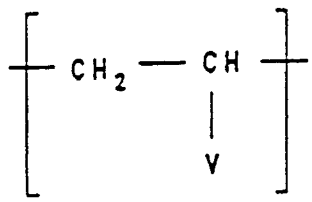

in which

V is $C_6$-$C_{18}$-aryl, preferably phenyl, or phenoxyacetyl, $C_4$-$C_6$-lactam, preferably N-pyrrolidyl, a group of the formula $O$-$R^7$, in which $R^7$ is $C_1$-$C_{18}$-alkyl, preferably $C_1$-$C_{10}$-alkyl, a group of the formula $(O)C$-$R^7$ or a group of the formula $OOC$-$R^7$.

2. A process for the preparation of a copolymer as claimed in claim 1, which comprises polymerizing at least one ethylenically unsaturated carboxylic acid, as the monomer, and at least one unsaturated fatty acid derivative, as the comonomer, with one another in the presence of a free radical donor, if appropriate in the presence of a regulator and/or a coinitiator, and then adding a base.

3. The process as claimed in claim 2, wherein bulk or solution polymerization is carried out.

4. The process as claimed in claim 2, wherein the polymerization is carried out in a stirred tank, a cascade of stirred tanks, a tube reactor or a static mixer.

5. The process as claimed in claim 2, wherein the polymerization is carried out in the presence of 0.1 to 20% by weight, preferably 0.2 to 10% by weight, based on the monomer content, of a free radical donor.

6. The process as claimed in claim 2, wherein the polymerization is carried out in the presence of 0.1 to 10% by weight, based on the monomer content, of a regulator.

7. The process as claimed in claim 2, wherein the polymerization is carried out in the presence of 0.1 to 2000 ppm by weight, preferably 0.1 to 1000 ppm by weight, of a coinitiator.

8. The process as claimed in claim 2, wherein the polymerization is carried out at a temperature of 50 to 200°C, preferably 100 to 180°C.

9. The process as claimed in claim 2, wherein the reaction mixture is cooled to a temperature below 100°C, preferably 20 to 80°C, particularly preferably 20 to 40°C, after the polymerization.

10. The process as claimed in claim 2, wherein an amount of a base which is equimolar to the free carboxyl groups contained in the copolymer is added to the reaction mixture.

11. The process as claimed in claim 10, wherein a 20 to 40% strength by weight aqueous solution of an alkali metal hydroxide or of a water-soluble nitrogen compound is used as the base.

12. The use of a copolymer as claimed in claim 1 as a fatliquoring emulsifier for vegetable and/or animal fats, oils and/or waxes.

13. A fatliquoring agent for leather and fur pelts comprising at least one copolymer as claimed in claim 1.

14. A fatliquoring agent as claimed in claim 13, comprising at least one copolymer as claimed in claim 1, saturated and/or unsaturated fatty acid derivatives, preferably fatty acid esters, particularly preferably fatty acid triglycerides, water and if appropriate additives, preferably neutral oils.

15. A process for the preparation of a fatliquoring agent as claimed in claim 13, comprising the following measures:

- preparation of a copolymer as claimed in claim 1 by a process which comprises the measures as claimed in one of claims 2 to 10 and
- if appropriate addition of an acid and
- addition of 50 to 80% by weight of water, based on the total weight of the emulsion.

## Revendications

1. Sels de copolymères d'acides carboxyliques à insaturation éthylénique et de dérivés d'acides gras à insaturation éthylénique contenant

(A) de 1 à 99 % en poids de motifs de structure A de formule

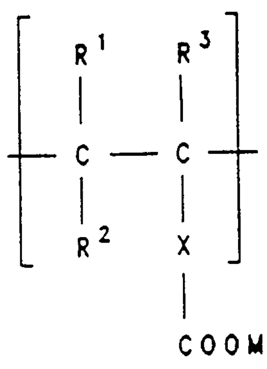

où

$R^1$ représente l'hydrogène ou alkyle en $C_1$-$C_4$,
$R^2$ représente l'hydrogène ou alkyle en $C_1$-$C_4$,
$R^3$ représente l'hydrogène ou alkyle en $C_1$-$C_4$, de préférence méthyle,
X représente $-(CH_2)_{0-10}-$ ou aryle en $C_6$-$C_{18}$, de préférence phényle, et
M représente un ion alcalin, alcalino-terreux ou ammonium,

(B) de 99 à 1 % en poids de motifs de structure B de formule

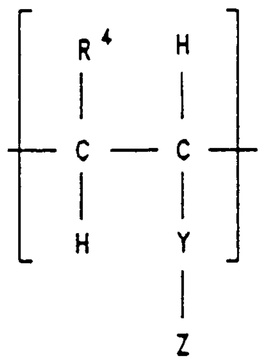

où

$R^4$ représente alkyle en $C_2$-$C_{16}$ ou alcényle en $C_2$-$C_{16}$,

Y représente alkylène en $C_1$-$C_{13}$, $-CH_2-(CH=CH-CH_2)_{1-5}-$ ou $-(CH=CH)_{1-3}-$ et

Z un groupe de formule

CN,

$C(O)N(R^5)_2$,

où $R^5$ représente l'hydrogène, alkyle en $C_1$-$C_{18}$, alcényle en $C_1$-$C_{18}$ et/ou $-(CH_2)_{1-3}-OH$,

$COO-R^6$

où $R^6$ représente alkyle en $C_1$-$C_{36}$, de préférence alkyle en $C_1$-$C_5$ ou alkyle en $C_{16}$-$C_{36}$,

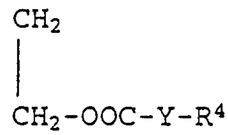

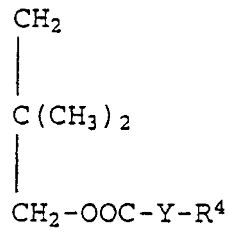

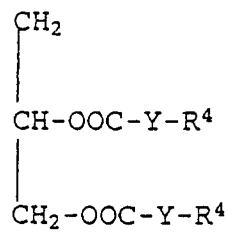

ou

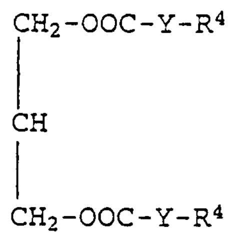

(C) de 0 à 40 % en poids de motifs de structures C de formule

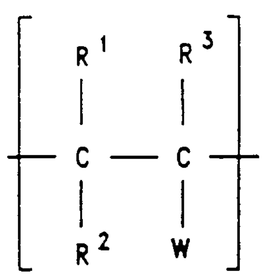

où

| | |
|---|---|
| $R^1$, $R^2$ et $R^3$ | ont la signification donnée ci-dessus et |
| W | représente un groupe de formule CN, $C(O)N(R^5)_2$, où $R^5$ a la signification donnée ci-dessus, ou $COOR^7$, où $R^7$ représente alkyle en $C_1$-$C_{18}$, de préférence alkyle en $C_1$-$C_{10}$ |

et

(D) de 0 à 40 % en poids de motifs de structure D de formule

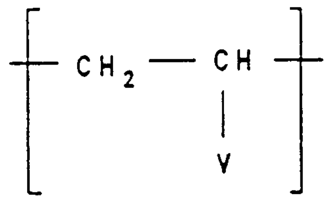

où

V représente aryle en $C_6$-$C_{18}$, de préférence phényle ou phénoxyacétyle, lactame en $C_4$-$C_6$, de préférence N-pyrrolidyle, un groupe de formule O-$R^7$, où $R^7$ représente alkyle en $C_1$-$C_{18}$, de préférence alkyle en $C_1$-$C_{10}$, un groupe de formule (O)C-$R^7$ ou un groupe de formule OOC-$R^7$.

**2.** Procédé pour la préparation de copolymères selon la revendication 1, caractérisé en ce que l'on polymérise au moins un acide carboxylique à insaturation éthylénique en tant que monomère et au moins un dérivé d'acide gras insaturé en tant que comonomère en présence d'un agent formateur de radicaux, éventuellement en présence d'un régulateur et/ou d'un co-amorceur et ensuite on ajoute une base.

**3.** Procédé selon la revendication 2, caractérisé en ce que l'on met en oeuvre une polymérisation en masse ou en solution.

**4.** Procédé selon la revendication 2, caractérisé en ce que l'on met en oeuvre la polymérisation dans une cuve à agitation, dans des agitateurs en cascade, un réacteur tubulaire ou un mélangeur statique.

**5.** Procédé selon la revendication 2, caractérisé en ce que l'on met en oeuvre la polymérisation en présence de 0,1 à 20 % en poids, de préférence de 0,2 à 10 % en poids par rapport à la teneur en monomères d'un agent formateur de radicaux.

**6.** Procédé selon la revendication 2, caractérisé en ce que l'on met en oeuvre la polymérisation en présence de 0,1 à 10 % en poids par rapport à la teneur en monomères d'un agent régulateur.

**7.** Procédé selon la revendication 2, caractérisé en ce que l'on met en oeuvre la polymérisation en présence de 0,1 à 2 000 ppm en poids, de préférence de 0,1 à 1 000 ppm en poids d'un co-amorceur.

**8.** Procédé selon la revendication 2, caractérisé en ce que l'on met en oeuvre la polymérisation à une température de 50 à 200 °C, de préférence de 100 à 180 °C.

**9.** Procédé selon la revendication 2, caractérisé en ce que l'on refroidit le mélange réactionnel après polymérisation à une température inférieure à 100 °C, de préférence à 20 à 80 °C, de manière particulièrement préférée de 20 à 40 °C.

**10.** Procédé selon la revendication 2, caractérisé en ce que l'on ajoute au mélange réactionnel une quantité équimolaire d'une base par rapport aux groupes carboxyle libres contenus dans le copolymère.

**11.** Procédé selon la revendication 10, caractérisé en ce que l'on utilise en tant que base une solution aqueuse à 20 à 40 % en poids d'un hydroxyde de métal alcalin ou d'un composé azoté soluble dans l'eau.

**12.** Utilisation des copolymères de la revendication 1 en tant émulsifiants graissants pour les cires, les huiles et/ou les graisses végétales et/ou animales.

**13.** Agent nourrissant pour le cuir et les peaux de fourrure contenant au moins un copolymère selon la revendication 1.

**14.** Agent nourrissant selon la revendication 13 contenant au moins un copolymère selon la revendication 1, des dérivés d'acides gras saturés et/ou insaturés, de préférence des esters d'acides gras, de manière particulièrement préférée des triglycérides d'acides gras, l'eau et éventuellement des adjuvants, de préférence les huiles neutres.

**15.** Procédé pour la préparation d'agents nourrissants selon la revendication 13 comprenant les mesures :

- préparation de copolymères selon la revendication 1 à l'aide d'un procédé qui comprend les mesures contenues dans les revendications 2 à 10, et
- éventuellement addition d'un acide ainsi que
- addition de 50 à 80 % en poids d'eau, par rapport au poids total de l'émulsion.